# EUROPÄISCHE PATENTANMELDUNG

(11) **EP 1 211 609 A1**
(43) Veröffentlichungstag der Anmeldung: **05.06.2002**
(21) Anmeldenummer: 00126076.9
(22) Anmeldetag: 29.11.2000
(51) Int. Cl.: G06F 17/30

(54) **Virtuelle Datenbank und zugehörige Zugriffsverfahren**

(71) Anmelder: Informationsverarbeitung Leverkusen GmbH (IVL), 51371 Leverkusen (DE)
(72) Erfinder: Errens, Karl-Josef,Dipl.-Ökon., 51377 Leverkusen (DE)
(74) Vertreter: Springorum, Harald, Dr.

(57) **Zusammenfassung**

Virtuelle Datenbank für geographische Informationssysteme (GIS), welche zumindest eine Geodatenbank, welche entsprechend der räumlichen Position von Objekten organisiert ist und in welcher zumindest die räumlichen Daten, vorzugsweise die geometrischen und/oder geographischen Daten der Objekte hinterlegt sind, und eine, von der Geodatenbank unterschiedliche Strukturdatenbank, in welcher zumindest die strukturellen, d.h. die nicht räumlichen Daten der Objekte hinterlegt sind aufweist, dadurch gekennzeichnet, daß zusätzlich zu den räumlichen Daten für die jeweiligen Objekte auch dem jeweiligen Objekt zugeordnete Verweisinformationen in der Geodatenbank hinterlegt sind, die die in der Geodatenbank hinterlegten räumlichen Objektdaten zumindest einem Objekt in der Strukturdatenbank zuordnen, und das weiterhin ein Zugriffsmodul vorgesehen ist, welches bei einem Zugriff auf ein Objekt der Geodatenbank automatisch mittels der hier hinterlegten Verweisinformationen die Zuordnung auf die zugeordneten Objekte der Strukturdatenbank herstellt und hierdurch auch den Zugriff auf die hier hinterlegten zum Objekt der Geodatenbank zugehörigen Strukturdaten erlaubt.

## Beschreibung

Die vorliegende Erfindung betrifft eine virtuelle Datenbank und zugehörige Zugriffsverfahren insbesondere für geographische Informationssysteme (GIS).

Geographische Informationssysteme (GIS) stellen ihrem Benutzer meist zwei grundsätzlich unterschiedliche Arten von Informationen zur Verfügung nämlich zum einen räumliche Daten, also die Daten über die geometrischen Verhältnisse, wie etwa Abmessungen der Objekte auf die mittels des geographischen Informationssystems zugegriffen werden kann und die durch das GIS auch graphisch dargestellt werden können und zum anderen weitere Daten nicht geometrischer Natur, die den einzelnen Objekten zugeordnet werden.

Als Beispiel sei hier ein GIS angeführt, welches die Telefonanschlüsse eines bestimmten Gebietes dokumentieren helfen soll. Zum einen liegen dann räumliche Daten über die Lage der Kabelstränge zu den einzelnen Teilnehmern vor, zum anderen aber auch Daten zu den Teilnehmern selbst, etwa ihre Adresse, ihre jeweiligen Vertragskonditionen, die Zuständigkeit von Servicemitarbeitern, die Art der Installation, etwa welche Komponenten dort eingesetzt wurden, die zugehörigen Verweise auf womögliche Stücklisten dazu bis hin zu den Materialnummern der betreffenden Ersatzteile, die sich aus den Stücklisten ergeben.

Dadurch, daß ein GIS diese sehr unterschiedlichen Daten, nämlich räumliche Daten einerseits und strukturelle Daten andererseits handhaben muß, ergibt sich nun das nachfolgend beschriebene technische Problem.

Grundsätzlich sind nämlich die Anforderungen, die an eine Datenbank zu stellen sind, die die beiden zuvor erwähnten Arten von Daten effektiv verwalten soll völlig unterschiedlich:

Zur Verwaltung räumlicher Daten ist es aufgrund der hierbei anfallenden hohen Datenmengen aus Gründen der Reaktionsgeschwindigkeit auf Datenbankabfragen hin wünschenswert, daß auf die Objekte anhand ihrer räumlichen Daten besonders effektiv zugegriffen werden kann, etwa dadurch, daß die räumlichen Daten von solchen Objekten, die in der Realität geographisch benachbart sind, auch tatsächlich physikalisch oder zumindest logisch eng 'benachbart' gespeichert werden. Dies ist etwa deshalb erforderlich, um es zu ermöglichen, daß der Verwender eines GIS in der Lage ist, mittels entsprechender Navigationsmittel (etwa einer Maus, einem Trackball oder auch ausgewählten Tasten der Bedientastatur) effektiv durch die Welt des graphischen Abbildes der hinterlegten räumlichen Daten zu navigieren, etwa hierin scrollen zu können. Eine solche Organisation der räumlichen Daten kann auf verschiedene Arten, etwa durch die Verwendung sogenannter QuadTrees erreicht werden. Alle diese Verfahren nutzen zum schnellen Zugriff auf die räumlichen Daten deren wesensimmanente Eigenschaft aus, daß die Objekte durch ihre Position bestimmt sind. Hierdurch kann dem Erfordernis des effektiven Zugriffs auf die räumlichen Daten Genüge getan werden, dies jedoch um den Preis einer recht starren, eben am Positionsraster orientierten, Datenbankstruktur.

Diese aus Gründen der Effektivität notwendige technische Organisation der räumlichen Daten ist jedoch für die strukturellen Daten der jeweiligen Objekte äußerst ungeeignet. Strukturelle Objektdaten werden heute üblicherweise nach dem Stand der Technik in relationalen Datenbanken hinterlegt, die ihrem jeweiligen Verwender eine logische Sicht der Dinge, nämlich der Objekte und ihrer Verhältnisse untereinander vermittelt, ohne daß der Benutzer mit der tatsächlichen technischen Realisierung dieser Datenbanken weiter belastet wäre.

So stellt sich das unmittelbare 'Anhängen' der strukturellen Daten an die technische Organisation der räumlichen Daten in deren Datenbasis selbst als äußerst unbefriedigend und als technische 'Krücke' dar, da deren starres nur an der räumlichen Position orientiertes Organistionsprinzip für die strukturellen Daten und ihre vielfältigen Relationen untereinander denkbar ungeeignet ist.

Daher besteht die derzeitige nach dem Stand der Technik bekannte Lösung meist darin, nur die notwendigsten strukturellen Daten an die räumlichen Daten anzuhängen und die strukturellen Daten parallel und völlig unabhängig in einer eigenen relationalen Datenbank zu organisieren. Diese Lösung weist jedoch gleichfalls entscheidende Nachteile auf. Es müssen so nämlich zwei unterschiedliche Datenbanken eingerichtet und unterhalten werden, wozu es jeweils kundiger Bedienkräfte bedarf, deren Idealtypus, in Gestalt eines beider Systeme Kundigen nur schwer zu finden ist. Damit sind Inkonsistenzen in der Führung der Bestände beider Datenbanken geradezu vorprogrammiert, da die Bediener der einen Datenbank jeweils die Bediener der anderen Datenbank von vorgenommen Änderungen zwecks Nachtrag unterrichten müssen und umgekehrt, was in der Praxis bei genügend großen Systemen allein schon aufgrund menschlichen Versagens, wie Bequemlichkeit, Vergessen oder auch Uneinsichtigkeit vorkommt.

Es ist daher Aufgabe der vorliegenden Erfindung ein geographisches Informationssystem (GIS) anzugeben, welches sowohl die effektive Verwaltung räumlicher Daten wie auch die problemadäquate Verwaltung struktureller Daten der in GIS verwalteten Objekte ermöglicht, ohne daß es der parallelen manuellen Führung zweier unterschiedlich strukturierter Datenbanken bedarf.

Diese Aufgabe wird erfindungsgemäß durch eine virtuelle Datenbank für geographische Informationssysteme (GIS) gelöst, welche zumindest eine Geodatenbank, welche entsprechend der räumlichen Position von Objekten organisiert ist und in welcher zumindest die räumlichen Daten, vorzugsweise die geometrischen und/oder geographischen Daten der Objekte hinterlegt sind, und eine, von der Geodatenbank unterschiedliche Strukturdatenbank, in welcher zumindest die strukturellen, d.h. die nicht räumlichen Daten der Objekte hinterlegt sind, aufweist und die erfindungsgemäß dadurch gekennzeichnet ist, daß zusätzlich zu den räumlichen Daten für die jeweiligen Objekte auch dem jeweiligen Objekt zugeordnete Verweisinformationen in der Geodatenbank hinterlegt sind, die die in der Geodatenbank hinterlegten räumlichen Objektdaten zumindest einem Objekt in der Strukturdatenbank zuordnen, und daß weiterhin ein Zugriffsmodul vorgesehen ist, welches bei einem Zugriff auf ein Objekt der Geodatenbank automatisch mittels der hier hinterlegten Verweisinformationen die Zuordnung auf die zugeordneten Objekte der Strukturdatenbank herstellt und hierdurch auch den Zugriff auf die hier hinterlegten, zum Objekt der Geodatenbank zugehörigen Strukturdaten erlaubt.

Diese Lösung ermöglicht es nun eine effiziente Verwaltung und insbesondere einen effizienten Zugriff auf die ihrem Wesen nach unterschiedlichen räumlichen und strukturellen Daten zu gestatten, indem den nach räumlichen Kriterien organisierten Daten in der Geodatenbank zumindest eine Verweisinformation auf die zugehörigen strukturellen Daten in der Strukturdatenbank zugeordnet ist. Dies kann etwa durch Hinterlegung eines Zugriffsschlüssels für die Strukturdatenbank in der Geodatenbank zum jeweiligen Objekt geschehen. Das zum GIS gleichfalls zugehörige Zugriffsmodul kann dann mittels des beim Zugriff auf die Geodatenbank - welcher zumeist nach räumlichen Kriterien, also etwa mittels eines räumlichen Schlüssel geschieht - dort als Verweisinformation gefundenen Schlüssels auf die zugehörigen Objekte der Strukturdatenbank zugreifen.

Anzumerken in diesen Zusammenhang ist, daß die Geodatenbank im Sinne der vorliegenden Erfindung auch dann als entsprechend der räumlichen Position von Objekten organisiert anzusehen ist, wenn diese Organisation ganz oder zum Teil auf rein logischer Ebene erfolgt; es bedarf dazu, insbesondere angesichts der fortschreitenden Datenbanktechnik, nicht unbedingt einer physikalischen Organisation der Geodatenbank entsprechend der räumlichen Position von Objekten.

In einer bevorzugten Ausführungsform der virtuellen Datenbank für geographische Informationssysteme (GIS) werden zusätzlich zu den strukturellen Daten für die jeweiligen Objekte auch dem jeweiligen Objekt zugeordnete Rück-Verweisinformationen in der Strukturdatenbank hinterlegt, die die in der Strukturdatenbank hinterlegten strukturellen Objektdaten zumindest einem Element in der Geodatenbank zuordnen. Hierdurch ist es sodann möglich bei einem Zugriff auf die Strukturdatenbank auch Rückschlüsse auf die Objekte der Geodatenbank zu ziehen. So kann etwa im Falle dieser virtuellen Datenbankarchitektur festgestellt werden, in welchen Häusern sich etwa Gasanschlußbauteile eines bestimmten Herstellers befinden. Vorzugsweise weist die erfindungsgemäße virtuelle Datenbank hierzu ein Rück-Zugriffsmodul auf, welches dies anhand der Rück-Verweisinformation bzw. Rück-Verweisinformationen leistet.

Vorzugsweise ist bei der vorliegenden Erfindung die Geodatenbank als QuadTree organisiert, was sich für geographische Informationssysteme, die nach räumlichen Gesichtspunkten organisiert sind, besonders bewährt hat. Das System Smallworld (geschützte Marke) stellt etwa eine solche für die virtuelle Datenbank nach der vorliegenden Erfindung geeignete Ausführung dar.

Es ist aber auch möglich, daß die Geodatenbank entsprechend der räumlichen Position von Objekten als relationale Datenbank organisiert ist. Hierbei kann sie dann auch rein logisch entsprechend der räumlichen Position von Objekten organisiert werden, etwa indem zwischen einander benachbarten Objekte spezielle - eben geometrische - Relationen angelegt werden.

Die Strukturdatenbank ist vorzugsweise als relationale Datenbank organisiert, wie sie etwa in SAP (geschützte Marke) Systemen verwendet wird, was dem Aufbau der strukturellen Daten schon vom logischen Ansatz her entspricht. Aber auch Schemadatenbanken (CODASYL) oder auch hierarchische oder assoziative Datenbanken eignen sich hierfür gut.

In einer besonders bevorzugten Ausführungsform der vorliegenden Erfindung ist die virtuelle Datenbank für geographische Informationssysteme (GIS) dadurch gekennzeichnet, daß weiterhin ein Codegenerierungsmodul vorgesehen ist, welches den Datenfeldaufbau der Strukturdatenbank analysiert und in Abhängigkeit des so analysierten Datenfeldaufbaus den Programmcode des Zugriffsmoduls so generiert, daß es auf die Datenfelder der Strukturdatenbank zugreifen - und diese damit manipulieren - kann. Die Analyse der Strukturdatenbank erfolgt dabei vorzugsweise über standardisierte Zugriffsschnittstellen, etwa im Falle von SAP (geschützte Marke) über die dort vorgesehene CAD-Schnittstelle oder auch die BAPI-Schnittstelle, welche es vorzugsweise ermöglichen auch strukturelle Änderungen, also Änderungen des Datenfeldaufbaus der Datenbank abzufragen, um hierauf reagieren zu können. Stellt das Codegenerierungsmodul etwa durch eine Abfrage hierüber fest, daß sich der Datenfeldaufbau der Strukturdatenbank geändert hat, also etwa neue Felder hinzugekommen oder alte Felder weggefallen sind oder auch, daß sich ganze Strukturen verändert haben, so generiert es den Code für das Zugriffsmodul, der sodann erforderlich ist, um hiermit auf die Strukturdatenbank in ihrer angepaßten Struktur zugreifen zu können. Damit ist gewährleistet, daß auch Änderungen, die allein auf Strukturdatenbankseite erfolgen von der erfindungsgemäßen virtuellen Datenbank erkannt und berücksichtigt werden. Auf diese Weise ist es so etwa möglich für Geodatenbank und für Strukturdatenbank völlig unterschiedliche Datenbanksysteme auch unterschiedlicher Hersteller zu einer einzigen für den Benutzer der erfindungsgemäßen virtuellen Datenbank für GIS konsistenten Datenbank zusammenzufügen, soweit nur irgendeine Möglichkeit der Analyse des Aufbaus der Strukturdatenbank besteht, wie dies etwa bei SAP (geschützte Marke) der Fall ist.

Vorzugsweise wird das Codegenerierierungmodul bei jedem Hochfahren des geographischen Imformationssystems ausgeführt, um so für einen regelmäßigen Abgleich zu sorgen. Es kann aber auch zyklisch mit gewissen zeitlichen Abständen oder auch direkt nach jeder Änderung online ausgeführt werden, d.h., daß das Codegenerierungsmodul laufend Änderungen im Datenfeldaufbau der Strukturdatenbank analysiert und sofort (online) nach einer festgestellten Änderung des so analysierten Datenfeldaufbaus den Programmcode des Zugriffsmoduls so generiert, daß es auf die Datenfelder der Strukturdatenbank zugreifen kann.

In einer weiteren besonders bevorzugten Ausführungsform nach der vorliegenden Erfindung ist die virtuelle Datenbank für geographische Informationssysteme (GIS) dadurch gekennzeichnet, daß das Zugriffsmodul auf die Strukturdatenbank mittels Internet Inter Object Request Broker Protocol (IIOP) zugreift.

Auf diese Weise kann der Zugriff unter Verwendung der sogenannten "Common Object Request Broker Architecture" (CORBA) erfolgen, welcher sich als offener Standard für verteilte Netzapplikationen immer größerer Beliebtheit erfreut. Dabei sollte jedoch darauf geachtet werden, daß der Zugriff von einer wachsenden Anzahl von Teilnehmern auf die Strukturdatenbank skalierbar bleibt, was etwa dadurch gewährleistet werden kann, daß jeweils eine bestimmte Anzahl von Teilnehmern (Clients), welche Zugriff auf die Strukturdatenbank haben sollen auf einem sogenannten CORBA-Server zusammengefaßt werden, welcher den Datenverkehr zum jeweiligen Client mittels IIOP führt und wobei diese CORBA-Server sodann mit dem eigentlichen Strukturdatenbankserver verbunden werden.

Im folgenden werden nicht einschränkend zu verstehende Ausführungsbeispiele anhand der Zeichnung besprochen. In dieser zeigen:
- Fig. **1**: eine Ausführungsform einer virtuellen Datenbank für geographische Informationssysteme (GIS) nach der vorliegenden Erfindung in schematischer Darstellung,
- Fig. **2**: die schematische Darstellung der Struktur von Beispieldaten in einer Ausführungsform einer virtuellen Datenbank für geographische Informationssysteme (GIS) nach der vorliegenden Erfindung,
- Fig. **3a**: eine schematische Darstellung eines Codegenerierungsmoduls für die erfindungsgemäße virtuelle Datenbank, welches den Datenfeldaufbau der Strukturdatenbank analysiert und in Abhängigkeit des so analysierten Datenfeldaufbaus den Programmcode des Zugriffsmoduls so generiert, daß es auf die Datenfelder der Strukturdatenbank zugreifen kann, und
- Fig. **3b**: eine weitere schematische Darstellung eines Codegenerierungsmoduls für die erfindungsgemäße virtuelle Datenbank, welches den Datenfeldaufbau der Strukturdatenbank analysiert und in Abhängigkeit des so analysierten Datenfeldaufbaus den Programmcode des Zugriffsmoduls so generiert, daß es auf die Datenfelder der Strukturdatenbank zugreifen kann.

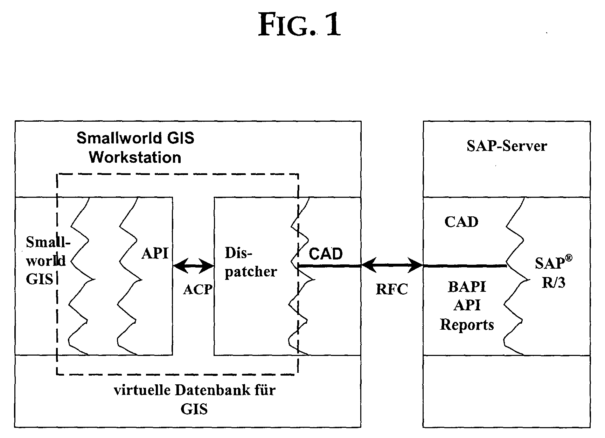

Fig. **1** zeigt eine Ausführungsform einer virtuellen Datenbank für geographische Informationssysteme (GIS) nach der vorliegenden Erfindung in schematischer Darstellung. Zu sehen ist hier zum einen eine Geodatenbank, nämlich das System Smallworld (geschützte Marke) GIS, welches nach dem Prinzip der QuadTrees aufgebaut ist und zum anderen eine von der Geodatenbank unterschiedliche Strukturdatenbank, hier namentlich ein SAP-System (SAP geschützte Marke), also eine relationale Strukturdatenbank. Es ist ein Zugriffsmodul, nämlich ein Modul namens Dispatcher vorgesehen, welches bei einem Zugriff auf ein Objekt von Smallworld (geschützte Marke) GIS in der Lage ist, automatisch mittels der in Smallworld (geschützte Marke) hinterlegten Verweisinformationen die Zuordnung auf die zugeordneten Objekte der Strukturdatenbank SAP (geschützte Marke) herzustellen und hierdurch auch den Zugriff auf die hier hinterlegten zum Objekt zugehörigen Strukturdaten erlaubt. In der so gebildeten virtuellen Datenbank werden Objekte angelegt und verwaltet, die mit geographischen und sonstigen (strukturellen) Informationen versehen sind. Solange keine strukturellen, etwa kaufmännischen Daten berührt sind, ist eine Kommunikation mit SAP (geschützte Marke) nicht notwendig. Wenn jedoch z.B. Daten der Materialverwaltung oder Instandhaltungsdaten angesprochen sind, dann kommt die erfindungsgemäße virtuelle Datenbank zum Einsatz und ermöglicht dem Benutzer der erfindungsgemäßen virtuellen datenbank für GIS den unmittelbaren einheitlichen Zugriff auch auf diese Daten ohne die Nachteile eines hierfür ungeeigneten geographischen Informationssystems nach dem Stand der Technik in Kauf nehmen zu müssen (ungeeignete Organisation) und ohne separat auf die Strukturdatenbank (hier SAP (geschützte Marke) zugreifen zu müssen. Der Zugriff auf SAP (geschützte Marke) kann dabei über unterschiedliche Schnittstellen, etwa CAD- oder auch BAPI- oder API-Schnittstellen erfolgen, wobei etwa ein RFC (Remote Function Call) Protokoll zum Einsatz gelangen kann. Aber auch der Zugriff mittels IIOP etwa über einen zwischengeschalteten CORBA-Server ist hier denkbar.

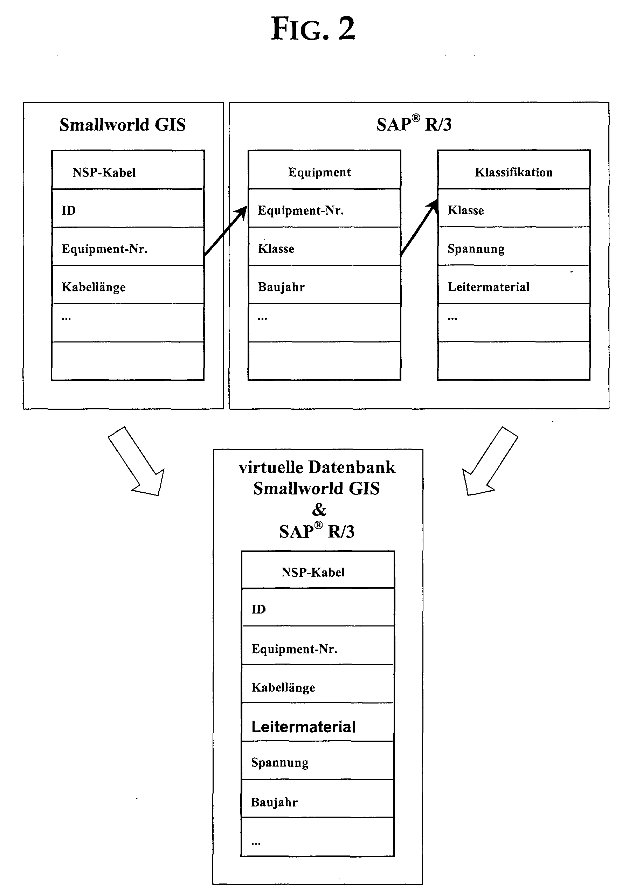

Fig. **2** zeigt die schematische Darstellung der Struktur von Beispieldaten in einer Ausführungsform einer virtuellen Datenbank für geographische Informationssysteme (GIS) nach der vorliegenden Erfindung. In Smallworld (geschützte Marke) GIS, als der in diesem Ausführungsbeispiel verwendeten Geodatenbank wird für ein Objekt eine Equipment-Nr. angelegt, die ihre Entsprechung bei den technischen Objekten (hier Equipment) auf der SAP (geschützte Marke) Seite, als dem hier verwendeten Strukturdatenbanksystem hat. Zusätzlich werden für jedes technische Objekt Zusatzinformationen benötigt, die vorher definiert werden. Diese Festlegungen müssen so getroffen werden, damit einem Objekt auf der Smallworld (geschützte Marke) GIS Seite auch die richtigen SAP-Daten (SAP geschützte Marke) zugeordnet werden können. Jedesmal, wenn zu einem Smallworld-Objekt Daten (Smallworld geschützte Marke) abgefragt werden, zeigt sich dies für den Benutzer durch die vorliegende Erfindung als eine einheitliche Ansicht auf eine einzige virtuelle integrierte Datenbank. Die Zugriffe auf Objektdaten finden immer in dieser Datenbank statt, die quasi eine gemeinsame Sicht auf die Smallworld- und die SAP-Datenbank (Smallworld/SAP geschützte Marken) darstellt.

Über ein geeignetes Berechtigungs- und Zugriffssteuerungssystem wird darüber hinaus auch für den Verwender der erfindungsgemäßen virtuellen Datenbank sichergestellt, daß ein solcher Anwender, der nur geographische Daten bearbeiten soll oder nur gewisse Daten auf Strukturdatenbankseite anlegen, abfragen, ändern, löschen usw. kann, auch nur dies darf. Dabei finden Benutzerprofile und ähnliche bekannte Mechanismen Verwendung. Vorzugsweise kann ebensolches für den Anwender auf Strukturdatenbankseite eingerichtet werden, der keinerlei oder nur eingschränkten Zugriff auf geographische Daten haben soll, falls hier etwa Rückverweisungsinformationen auf die Geodatenbank und entsprechende Rückzugriffsmodule vorhanden sind. Über die erfindungsgemäße virtuelle Datenbank ist somit ein einheitlicher Zugriff auf beide Teildatenbanken möglich. Es können so etwa teildatenbankübergreifende Prozesse (Smallworld/SAP (Geschützte Marken) modelliert werden wie z.B. Störmeldungen. Eine Störmeldung wird so etwa in Smallworld (geschützte Marke) geographisch gesucht und im SAP (geschützte Marke) administriert. Kosten zur Schadenbeseitigung können so etwa im SAP (geschützte Marke) ermittelt oder ein Auftrag zur Störfallbeseitigung angelegt werden. Bei all diesen Abläufen weiß der Anwender nicht, in welchem der Teilsysteme er sich gerade befindet, denn die Prozesse hierzu laufen für ihn unsichtbar im Hintergrund ab, wobei er nur eine einheitliche Sicht der Dinge präsentiert bekommt.

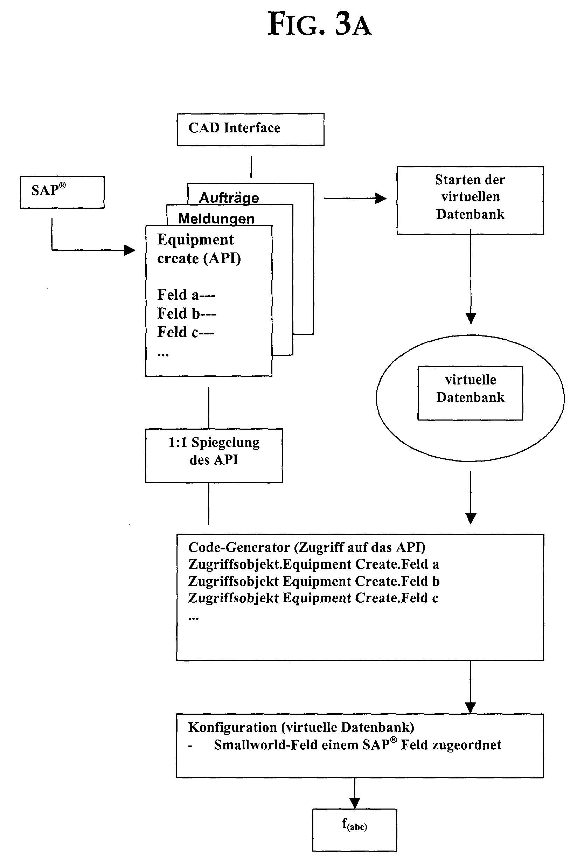

Fig. **3a** zeigt eine schematische Darstellung eines Codegenerierungsmoduls für die erfindungsgemäße virtuelle Datenbank, welches den Datenfeldaufbau der Strukturdatenbank analysiert und in Abhängigkeit des so analysierten Datenfeldaufbaus den Programmcode des Zugriffsmoduls so generiert, daß es auf die Datenfelder der Strukturdatenbank zugreifen kann. In der Strukturdatenbank, hier der SAP-Datenbank (SAP geschützte Marke) werden etwa ständig Änderungen vorgenommen, auf die die erfindungsgemäße virtuelle Datenbank reagieren muss. Kommt es zu solchen Änderungen, kann sie etwa während der Laufzeit die Änderungen analysieren und ihren eigenen Quellcode des Zugriffsmoduls aktualisieren. Beim nächsten Systemstart oder auch in gewissen Zeitabständen oder gar sofort nach Generierung (online) wird der neue Quellcode dann wirksam, d.h. die neuen Zugriffsmethoden werden generiert und über ihn kann auf die neuen Funktionalitäten zugegriffen werden. Wie dies abläuft soll zunächst am Beispiel der Fig. erläutert werden:
- Ein Benutzer möchte auf die Strukturdatenbank (hier etwa SAP (geschützte Marke)) zugreifen:
- Die Kommunikation funktioniert hier über das API (Application Programming Interface) → z.B. Equipment create
- Für die Funktion Equipment create wurden im API z.B. 3 Felder festgelegt → f_{(abc)}
- Der Code-Generator hat Zugriff auf das API, die 3 Felder werden heruntergeladen → als **f**_{(abc)} und für die erfindungsgemäße virtuelle Datenbank abgelegt
- Die Einträge auf der Strukturdatenbankseite (SAP Seite (SAP geschützte Marke)) werden 1:1 über den Code-Generator der erfindungsgemäßen virtuellen Datenbank zugänglich gemacht, die hierfür den erforderlichen Zugriffscode selbst erzeugt
- In einer Konfiguration werden die entsprechenden Geodatenbankfelder (etwa Smallworld (geschützte Marke)) und Strukturdatenbankfelder (etwa SAP Felder (SAP geschützte Marke)) einander zugeordnet
- Sodann kann die erfindungsgemäße virtuelle Datenbank mit der Funktion Equipment create arbeiten → **f**_{(abc)}

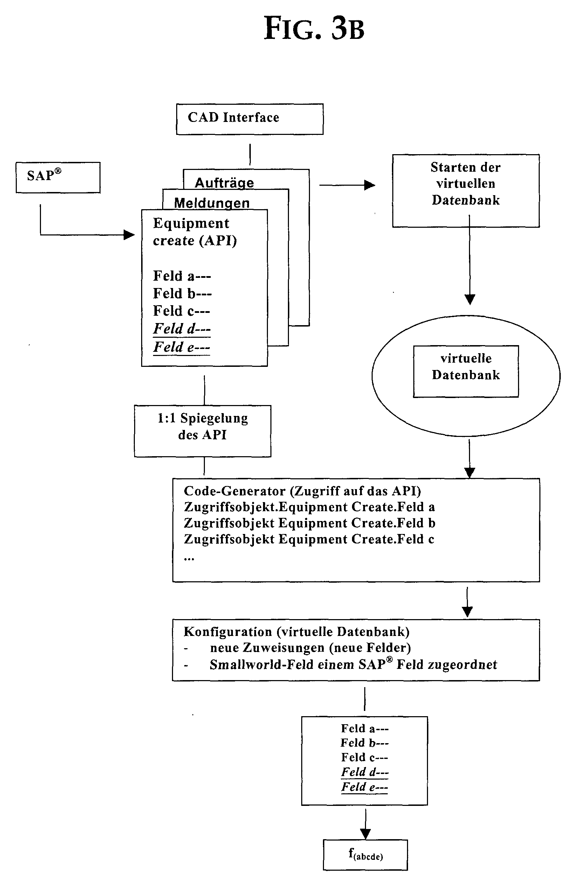

Fig. **3b** zeigt eine weitere schematische Darstellung eines Codegenerierungsmoduls für die erfindungsgemäße virtuelle Datenbank, welches den Datenfeldaufbau der Strukturdatenbank analysiert und in Abhängigkeit des so analysierten Datenfeldaufbaus den Programmcode des Zugriffsmoduls so generiert, daß es auf die Datenfelder der Strukturdatenbank zugreifen kann welche wie folgt erläutert wird:
- Ein Benutzer **A** möchte eine Aktion im SAP (geschützte Marke) (der Strukturdatenbank) mittels SAP-API (Application Programming Interface) (SAP geschützte Marke) Funktionsaufruf ausführen
- Die Kommunikation funktioniert über das API → z.B. Equipment create
- ein SAP Benutzer **B** (SAP geschützte Marke) hat zwischenzeitlich zwei zusätzliche Felder im SAP API (SAP geschützte Marke) konfiguriert, die der erfindungsgemäßen virtuellen Datenbank noch nicht bekannt sind
- die SAP API Tabellen (SAP geschützte Marke) werden im Image der erfindungsgemäßen virtuellen Datenbank abgespeichert, um Änderungen des SAP APIs (SAP geschützte Marke) nachhalten zu können
- der Code-Generator lädt alle Felder von der Strukturdatenbank (SAP (geschützte Marke)) herunter → sodann erkennt er, daß das SAP API (SAP geschützte Marke) geändert wurde und generiert daraufhin den Code neu
- In der Konfiguration werden die entsprechenden Geodatenbank (etwa Smallworld (geschützte Marke)) und die SAP (geschützte Marke) Felder einander zugeordnet
- Jetzt kann der Benutzer **A** mit dem neuen Equipment über die erfindungsgemäße virtuelle Datenbank arbeiten → **f**_{(abcde)}
- Die zusätzlichen Felder **d** und **e** werden optional angeboten

## Patentansprüche

1. Virtuelle Datenbank für geographische Informationssysteme (GIS), welche zumindest
- eine Geodatenbank,
welche entsprechend der räumlichen Position von Objekten organisiert ist und in welcher zumindest die räumlichen Daten, vorzugsweise die geometrischen und/oder geographischen Daten der Objekte hinterlegt sind, und
- eine, von der Geodatenbank unterschiedliche Strukturdatenbank,
in welcher zumindest die strukturellen, d.h. die nicht räumlichen Daten der Objekte hinterlegt sind
aufweist, **dadurch gekennzeichnet, daß**
zusätzlich zu den räumlichen Daten für die jeweiligen Objekte auch dem jeweiligen Objekt zugeordnete Verweisinformationen in der Geodatenbank hinterlegt sind, die die in der Geodatenbank hinterlegten räumlichen Objektdaten zumindest einem Objekt in der Strukturdatenbank zuordnen, und daß weiterhin ein Zugriffsmodul vorgesehen ist, welches bei einem Zugriff auf ein Objekt der Geodatenbank automatisch mittels der hier hinterlegten Verweisinformationen die Zuordnung auf die zugeordneten Objekte der Strukturdatenbank herstellt und hierdurch auch den Zugriff auf die hier hinterlegten, zum Objekt der Geodatenbank zugehörigen Strukturdaten erlaubt.

2. Virtuelle Datenbank für geographische Informationssysteme (GIS) nach Anspruch 1, **dadurch gekennzeichnet, daß** zusätzlich zu den strukturellen Daten für die jeweiligen Objekte auch dem jeweiligen Objekt zugeordnete Rück-Verweisinformationen in der Strukturdatenbank hinterlegt sind, die die in der Strukturdatenbank hinterlegten strukturellen Objektdaten zumindest einem Objekt in der Geodatenbank zuordnen.

3. Virtuelle Datenbank für geographische Informationssysteme (GIS) nach Anspruch 1 oder 2, **dadurch gekennzeichnet, daß** die Geodatenbank entsprechend der räumlichen Position von Objekten als QuadTree organisiert ist.

4. Virtuelle Datenbank für geographische Informationssysteme (GIS) nach Anspruch 1 oder 2, **dadurch gekennzeichnet, daß** die Geodatenbank entsprechend der räumlichen Position von Objekten als relationale Datenbank organisiert ist.

5. Virtuelle Datenbank für geographische Informationssysteme (GIS) nach Anspruch 1, 2, 3 oder 4, **dadurch gekennzeichnet, daß** die Strukturdatenbank als relationale Datenbank organisiert ist.

6. Virtuelle Datenbank für geographische Informationssysteme (GIS) nach einem der Ansprüche 1 bis 5, **dadurch gekennzeichnet, daß** weiterhin ein Codegenerierungsmodul vorgesehen ist, welches den Datenfeldaufbau der Strukturdatenbank analysiert und in Abhängigkeit des so analysierten Datenfeldaufbaus den Programmcode des Zugriffsmoduls so generiert, daß es auf die Datenfelder der Strukturdatenbank zugreifen kann.

7. Virtuelle Datenbank für geographische Informationssysteme (GIS) nach Anspruch 6, **dadurch gekennzeichnet, daß** das Codegenerierungsmodul bei jedem Hochfahren des geographischen Informationssystems ausgeführt wird.

8. Virtuelle Datenbank für geographische Informationssysteme (GIS) nach Anspruch 6, **dadurch gekennzeichnet, daß** das Codegenerierungmodul zyklisch in zeitlichen Abständen ausgeführt wird.

9. Virtuelle Datenbank für geographische Informationssysteme (GIS) nach Anspruch 6, **dadurch gekennzeichnet, daß** das Codegenerierungmodul laufend Änderungen im Datenfeldaufbau der Strukturdatenbank analysiert und sofort (online) nach einer festgestellten Änderung des so analysierten Datenfeldaufbaus den Programmcode des Zugriffsmoduls so generiert, daß es auf die Datenfelder der Strukturdatenbank zugreifen kann.

10. Virtuelle Datenbank für geographische Informationssysteme (GIS) nach einem der Ansprüche 1 bis 9, **dadurch gekennzeichnet, daß** das Zugriffsmodul auf die Strukturdatenbank mittels Internet Inter Object Request Broker Protocol (IIOP) zugreift.
